# EUROPÄISCHE PATENTANMELDUNG

(11) **EP 4 039 531 A1**
(43) Veröffentlichungstag der Anmeldung: **10.08.2022**
(21) Anmeldenummer: 22151490.4
(22) Anmeldetag: 14.01.2022
(51) Int. Cl.: B60L 53/62, B60L 53/66

(54) **VERFAHREN ZUM ELEKTRISCHEN LADEN EINER ANTRIEBSBATTERIE FÜR EIN FAHRZEUG, FAHRZEUG, LADESTATION, COMPUTERPROGRAMMPRODUKT UND SPEICHERMITTEL**

(30) Priorität: 03.02.2021 DE 102021200996
(71) Anmelder: Volkswagen Aktiengesellschaft, 38440 Wolfsburg (DE)
(72) Erfinder: Semke, Artur, 38446 Wolfsburg (DE); Albrecht, Jan-Christoph, 38442 Wolfsburg (DE)

(57) **Zusammenfassung**

Die vorliegende Erfindung betrifft ein Verfahren zum elektrischen Laden einer Antriebsbatterie (15, 16) für ein Fahrzeug (10, 11) an einer Ladestation (12, 13, 14), aufweisend die Schritte: Bereitstellen eines oberen Ladelautstärke-Grenzwertes, Bereitstellen eines Ladelautstärke-Zielwertes, und Laden der Antriebsbatterie (15) unter Berücksichtigung des oberen Ladelautstärke-Grenzwertes sowie des Ladelautstärke-Zielwertes. Ferner betrifft die Erfindung ein Fahrzeug (10, 11), eine Ladestation (12, 13, 14) und ein Computerprogrammprodukt (20) zum Durchführen eines erfindungsgemäßen Verfahrens sowie ein Speichermittel (21) mit einem darauf gespeicherten Computerprogrammprodukt (20).

## Beschreibung

Die vorliegende Erfindung betrifft ein Verfahren zum elektrischen Laden einer Antriebsbatterie für ein Fahrzeug sowie ein Fahrzeug, eine Ladestation und ein Computerprogrammprodukt zum Durchführen eines solchen Verfahrens. Die Erfindung betrifft ferner ein Speichermittel, auf dem ein solches Computerprogrammprodukt gespeichert ist.

Beim elektrischen Laden einer Antriebsbatterie eines Fahrzeugs muss das Fahrzeug die hierbei entstehende Wärme abführen. Dies erfolgt im Stand der Technik üblicherweise über einen Kühler und einen Kühlerlüfter, die im Betrieb deutlich wahrnehmbare Geräusche emittieren. Dies ist insbesondere bei sogenannten Schnellladevorgängen der Fall.

Gattungsgemäße Ladevorgänge unterliegen hinsichtlich der durch den Ladevorgang erzeugten Lautstärke legislativen Grenzen, welche sich auf das Fahrzeug als solches beziehen. Um dem Rechnung zu tragen, wird gemäß den deutschen Patentanmeldungen DE 10 2018 209 072 A1 und DE 10 2018 209 071 A1 vorgeschlagen, dass sich das Fahrzeug basierend auf Ort und Zeit akustische Limits herleitet und diese einhält. Aus der deutschen Patentanmeldung DE 10 2017 107 538 A1 geht in diesem Zusammenhang hervor, dass das Fahrzeug hierzu Lärmemissions- und/oder Lärmimissionsgrenzwertdaten von einer Ladestation zum Laden des Fahrzeugs beziehen kann. In der Praxis hat sich bislang gezeigt, dass das Einhalten der geforderten Lärmgrenzwerte weiterhin eine komplexe Herausforderung darstellt.

Aufgabe der vorliegenden Erfindung ist es, der voranstehend beschriebenen Problematik zumindest teilweise Rechnung zu tragen. Insbesondere ist es Aufgabe der vorliegenden Erfindung, ein Verfahren und eine Vorrichtung zum elektrischen Laden einer Antriebsbatterie für ein Fahrzeug zur Verfügung zu stellen, mittels welchen ein zuverlässiges Einhalten akustischer Grenzen bei einer gleichzeitig möglichst hohen Ladeleistung erreicht werden kann.

Die voranstehende Aufgabe wird durch die Patentansprüche gelöst. Insbesondere wird die voranstehende Aufgabe durch das Verfahren gemäß Anspruch 1, das Fahrzeug gemäß Anspruch 8, die Ladestation gemäß Anspruch 9, das Computerprogrammprodukt gemäß Anspruch 10 sowie das Speichermittel gemäß Anspruch 11 gelöst. Weitere Vorteile der Erfindung ergeben sich aus den Unteransprüchen, der Beschreibung und den Figuren. Dabei gelten Merkmale, die im Zusammenhang mit dem Verfahren beschrieben sind, selbstverständlich auch im Zusammenhang mit dem erfindungsgemäßen Fahrzeug, der erfindungsgemäßen Ladestation, dem erfindungsgemäßen Computerprogrammprodukt, dem erfindungsgemäßen Speichermittel und jeweils umgekehrt, sodass bezüglich der Offenbarung zu den einzelnen Erfindungsaspekten stets wechselseitig Bezug genommen wird und/oder werden kann.

Gemäß einem ersten Aspekt der vorliegenden Erfindung wird ein Verfahren zum elektrischen Laden einer Antriebsbatterie für ein Fahrzeug an einer Ladestation zur Verfügung gestellt. Das Verfahren weist die folgenden Schritte auf:
- Bereitstellen eines oberen Ladelautstärke-Grenzwertes, insbesondere durch die Ladestation,
- Bereitstellen eines Ladelautstärke-Zielwertes, insbesondere durch das Fahrzeug,
- Laden der Antriebsbatterie unter Berücksichtigung des oberen Ladelautstärke-Grenzwertes sowie des Ladelautstärke-Zielwertes.

Im Rahmen der vorliegenden Erfindung wurde erkannt, dass es für einen möglichst guten Kompromiss zwischen einer hohen Ladeleistung und der Einhaltung von vorgegebenen Akustikgrenzen nicht ausreicht, gewünschte Ziel- und/oder Grenzwerte ausschließlich von einer Bezugsquelle zu berücksichtigen. Vielmehr sind es spezifische Daten vom Fahrzeug sowie von der Ladestation und/oder einem Ladepark mit mehreren Ladestationen, die zum gewünschten Ladevorgang führen. Indem durch die Ladestation zusätzlich zu Fahrzeugdaten, der obere Ladelautstärke-Grenzwert aktiv bereitgestellt, insbesondere an das Fahrzeug und/oder an einen Fahrzeug-Controller gesendet wird, kann der Ladevorgang im Vergleich zu konventionellen Ladesystemen, die ausschließlich über das Fahrzeug arbeiten, deutlich präziser durchgeführt werden. Insbesondere können unter Berücksichtigung des oberen Ladelautstärke-Grenzwertes und des Ladelautstärke-Zielwertes eine besonders hohe Ladeleistung erreicht und gleichzeitig das Verletzen von akustischen Grenzen verhindert werden. Unter dem oberen Ladelautstärke-Grenzwert ist ein für die Ladestation und/oder für einen Ladepark mit der Ladestation spezifischer oberer Ladelautstärke-Grenzwert zu verstehen. Das heißt, der obere Ladelautstärke-Grenzwert entspricht einer maximal zulässigen Ladelautstärke, insbesondere im Bereich der Antriebsbatterie und/oder des Fahrzeugs, beim Laden der Antriebsbatterie an der Ladestation und/oder im Ladepark. Damit werden Umgebungsaspekte berücksichtigt, die bei einer losgelösten Betrachtung des Fahrzeugs unberücksichtigt bleiben. Unter dem Ladelautstärke-Zielwert ist eine Ladelautstärke bzw. ein Zielwert zu verstehen, die bzw. der bei einer maximal möglichen und/oder zulässigen Ladeleistung zum Laden der Antriebsbatterie erreicht werden kann bzw. soll. Das heißt, unter dem Ladelautstärke-Zielwert kann auch ein Ladeleistungs-Zielwert für eine maximal mögliche und/oder zulässige Ladeleistung beim Laden der Antriebsbatterie verstanden werden. Unter Berücksichtigung der maximal zulässigen Ladelautstärke an der Ladestation und der maximal möglichen und/oder gewünschten Ladelautstärke bzw. Ladeleistung der Antriebsbatterie kann im Rahmen des erfindungsgemäßen Verfahrens nun ein entsprechender Kompromiss zwischen diesen beiden Anforderungen ausgehandelt werden.

Mit Bezug auf den Ladelautstärke-Zielwert kann unter der Ladelautstärke insbesondere eine Lautstärke verstanden werden, die während des elektrischen Ladens der Antriebsbatterie, insbesondere im Bereich der Antriebsbatterie, durch das Fahrzeug und/oder durch Hilfskomponenten des Fahrzeugs erzeugt wird.

Zum Durchführen des Verfahrens wird vorzugsweise ein Kommunikationsprotokoll zwischen der Ladestation und dem Fahrzeug und/oder der Antriebsbatterie ausgeführt und/oder verwendet. Das Kommunikationsprotokoll kann sich beispielsweise an der ISO 15118-20 orientieren und zum Ermöglichen der vorstehend beschriebenen Verfahrensschritte konfiguriert sein. Unter einem Kommunikationsprotokoll kann vorliegend insbesondere eine Vereinbarung verstanden werden, nach der eine Datenübertragung zwischen dem Fahrzeug und der Ladestation und/oder zwischen mehreren Fahrzeugen und mehreren Ladestationen eines Ladeparks abläuft. Das Kommunikationsprotokoll kann mithin als eine Menge von Regeln definiert werden, die Syntax, Semantik und/oder Synchronisation der Kommunikation zwischen dem Fahrzeug und der Ladestation bestimmen. Das Kommunikationsprotokoll kann durch Hardware, Software oder eine Kombination von beiden implementiert sein oder werden. Das Kommunikationsprotokoll kann insbesondere das Verhalten von Datenverbindungs-Hardware zwischen dem Fahrzeug und der Ladestation definieren.

Eine Datenübertragung zwischen dem Fahrzeug und der Ladestation zum Durchführen des erfindungsgemäßen Verfahrens wird vorzugsweise über ein Ladekabel zum elektrischen Laden der Antriebsbatterie durchgeführt. Gleichwohl ist es möglich, dass, beispielsweise zum Ausführen des Kommunikationsprotokolls, alternativ und/oder zusätzlich eine kabellose Datenübertragung zwischen dem Fahrzeug und der Ladestation durchgeführt wird. Hierzu können das Fahrzeug, die Ladestation und/oder ein Ladepark mit der Ladestation entsprechende Sender/Empfänger aufweisen.

Unter dem Fahrzeug kann ein reines Elektrofahrzeug mit Elektromotor oder ein Hybrid-Elektrofahrzeug mit Elektromotor sowie Verbrennungsmotor verstanden werden. Unter der Antriebsbatterie ist insbesondere die Hochvoltbatterie des Fahrzeugs zum Antreiben des Fahrzeugs zu verstehen. Das erfindungsgemäße Verfahren wird vorzugsweise zum elektrischen Laden der Antriebsbatterie in einem Fahrzeug durchgeführt. Gleichwohl ist es auch möglich, dass die Antriebsbatterie im Rahmen des Verfahrens außerhalb eines Fahrzeugs geladen wird.

Darunter, dass der obere Ladelautstärke-Grenzwert und der Ladelautstärke-Zielwert bereitgestellt werden kann verstanden werden, dass der jeweilige Wert zur Verarbeitung in einem geeigneten Controller bereitgestellt wird. Der Controller kann im Fahrzeug, in der Ladestation, oder als externes Bauteil außerhalb des Fahrzeugs und außerhalb der Ladestation, beispielsweise als zentraler Controller eines Ladeparks mit mehreren Ladestationen, zur Verfügung gestellt werden. Das Laden der Antriebsbatterie unter Berücksichtigung des oberen Ladelautstärke-Grenzwertes sowie des Ladelautstärke-Zielwertes kann dahingehend verstanden werden, dass das elektrische Laden der Antriebsbatterie unter Berücksichtigung des oberen Ladelautstärke-Grenzwertes sowie unter Berücksichtigung des Ladelautstärke-Zielwertes geregelt wird. Die Antriebsbatterie wird vorzugsweise in einem Gleichstrommodus geladen. Unter dem Ladelautstärke-Grenzwert kann ein genormter Grenzwert, insbesondere ein genormter Schalldruck-Grenzwert, verstanden werden. Ferner können unter dem Ladelautstärke-Grenzwert ein Schallleistungs-Grenzwert und/oder ein Lautstärke-Schwankungsstärke-Grenzwert verstanden werden. Zusätzlich oder alternativ zum Ladelautstärke-Grenzwert können auf analoge Weise psychoakustische Grenzwerte wie ein akustischer Schärfe- und/oder Rauhigkeits-Grenzwert berücksichtigt werden. Mithin kann es bevorzugt sein, wenn, im Falle von Messungen vor Ort, möglichst alle Fahrzeuge und/oder ladenden Antriebsbatterien nach dem gleichen und/oder einem genormten Messverfahren gemessen werden. Im Rahmen des genormten Messverfahrens kann die vom Fahrzeug und/oder von der Antriebsbatterie ausgehende Lautstärke beispielsweise mit einem vordefinierten Abstand vom Fahrzeug bzw. der Antriebsbatterie von beispielsweise einem Meter und/oder mit einem vordefinierten Abstand vom Boden von beispielsweise ebenfalls einem Meter mit einem Mikrofon, insbesondere mit einem genormten Mikrofon, gemessen werden.

Der obere Ladelautstärke-Grenzwert kann als zeitabhängiger oberer Ladelautstärke-Grenzwert bereitgestellt werden. So kann der Grenzwert über den Tag und die Nacht betrachtet mit unterschiedlichen Werten bereitgestellt werden. Am Tag kann beispielsweise ein höherer Grenzwert als in der Nacht bereitgestellt werden. Der Ladelautstärke-Zielwert kann in regelmäßigen und/oder unregelmäßigen Abständen wiederholend bereitgestellt und entsprechend mehrmals zusammen mit dem oberen Ladelautstärke-Grenzwert berücksichtigt werden. Ändern sich beispielsweise die Umgebungsbedingungen und/oder der Zeitpunkt des elektrischen Ladens, können sich auch der obere Ladelautstärke-Grenzwert, der Ladelautstärke-Zielwert und/oder ein Verhältnis zwischen dem oberen Ladelautstärke-Grenzwert und dem Ladelautstärke-Zielwert ändern. Dies kann entsprechende Auswirkungen auf den Ladevorgang bzw. einen Regelprozess zum Regeln des elektrischen Ladens haben. Gemäß einer weiteren Ausführungsform der vorliegenden Erfindung ist es möglich, dass bei einem Verfahren der obere Ladelautstärke-Grenzwert von der Ladestation an das Fahrzeug gesendet wird und der Ladelautstärke-Zielwert vom Fahrzeug an die Ladestation gesendet wird. Damit kann ein effizienter und zuverlässig funktionierender Betrieb des Verfahrens erreicht werden. Insbesondere kann auf eine Datenanfrage vom Fahrzeug bzw. einem Fahrzeug-Controller an die Ladestation zum Erlangen des oberen Ladelautstärke-Grenzwertes verzichtet werden. Im Rahmen des Verfahrens und insbesondere beim Ausführen des vorstehend beschriebenen Kommunikationsprotokolls kann der obere Ladelautstärke-Grenzwert wiederholend und/oder regelmäßig über die gesamte Ladedauer von der Ladestation an das Fahrzeug gesendet werden. Ebenso kann der Ladelautstärke-Zielwert wiederholend und/oder regelmäßig über die gesamte Ladedauer vom Fahrzeug an die Ladestation gesendet werden. Damit kann erreicht werden, dass die möglichst hohe Ladeleistung unter Einhaltung des oberen Ladelautstärke-Grenzwertes während des Ladens der Antriebsbatterie zuverlässig erreicht wird. Das heißt, ein Regelbetrieb zum Regeln eines entsprechenden Ladevorgangs kann entsprechend vorteilhaft durchgeführt werden.

Weiterhin ist es bei einem Verfahren gemäß der vorliegenden Erfindung möglich, dass durch die Ladestation ein oberer Ladestrom-Grenzwert eines maximal zulässigen Ladestroms und/oder ein oberer Ladespannungs-Grenzwert einer maximal zulässigen Ladespannung bereitgestellt werden und die Antriebsbatterie unter Berücksichtigung des oberen Ladestrom-Grenzwertes und/oder des oberen Ladespannungs-Grenzwertes geladen wird. Mit anderen Worten, im Rahmen des Verfahrens wird damit der gewünschte Trade-Off zwischen der maximal möglichen und/oder zulässigen Ladeleistung und dem oberen Ladelautstärke-Grenzwert bzw. einer maximal zulässigen Ladelautstärke durchgeführt. Durch das weitere Bereitstellen des oberen Ladestrom-Grenzwertes und/oder des oberen Ladespannungs-Grenzwertes mittels der Ladestation und/oder eines Ladeparks mit mehreren Ladestationen kann das gewünschte Ziel einer möglichst hohen Ladeleistung unter Einhaltung der akustischen Rahmenbedingungen effizient und zuverlässig realisiert werden. Erfindungsgemäß werden der obere Ladestrom-Grenzwert des maximal zulässigen Ladestroms und/oder der obere Ladespannungs-Grenzwert der maximal zulässigen Ladespannung vorzugsweise von der Ladestation und/oder einem Ladepark mit mehreren Ladestationen zum Fahrzeug gesendet.

Zudem ist es bei einem erfindungsgemäßen Verfahren möglich, dass durch das Fahrzeug ein Ladestrom-Zielwert eines möglichst zu erreichenden Ladestroms und/oder ein Ladespannungs-Zielwert einer möglichst zu erreichenden Ladespannung bereitgestellt werden und die Antriebsbatterie unter Berücksichtigung des Ladestrom-Zielwertes und/oder des Ladespannungs-Zielwertes geladen wird. Auch damit kann das gewünschte Ziel einer möglichst hohen Ladeleistung unter Einhaltung der akustischen Rahmenbedingungen effizient und zuverlässig erreicht werden. Erfindungsgemäß werden der Ladestrom-Zielwert des möglichst zu erreichenden Ladestroms und/oder der Ladespannungs-Zielwert der möglichst zu erreichenden Ladespannung vorzugsweise vom Fahrzeug zur Ladestation und/oder zu einem Ladepark mit mehreren Ladestationen gesendet.

Die vorstehend beschriebenen Informationen und/oder Daten hinsichtlich des oberen Ladelautstärke-Grenzwertes, des Ladelautstärke-Zielwertes, des oberen Ladestrom-Grenzwertes, des oberen Ladespannungs-Grenzwertes, des Ladestrom-Zielwertes und/oder des Ladespannungs-Zielwertes werden zwischen dem Fahrzeug und der Ladestation und/oder einem Ladepark mit mehreren Ladestationen zum gewünschten Laden der Antriebsbatterie, bevorzugt unter Verwendung des Kommunikationsprotokolls, ausgetauscht, insbesondere während der Zeitdauer des Ladevorgangs wiederholend, regelmäßig und/oder in einer Dauerschleife ausgetauscht und zum Laden der Antriebsbatterie entsprechend berücksichtigt.

Gemäß einer weiteren Variante der vorliegenden Erfindung ist es möglich, dass der obere Ladelautstärke-Grenzwert bei einem Verfahren mit Bezug auf wenigstens eine vordefinierte Himmelsrichtung bzw. unter Berücksichtigung der wenigstens einen vordefinierten Himmelsrichtung bereitgestellt wird. Bei Versuchen im Rahmen der Erfindung hat sich herausgestellt, dass die Berücksichtigung der Himmelsrichtung oder Himmelsrichtungen einen überraschend großen Effekt auf das Vorgehen zum wunschgemäßen Laden der Antriebsbatterie unter Einhaltung möglichst aller Vorgaben haben kann. Beim Laden der Antriebsbatterie kann demnach nicht nur berücksichtigt und/oder gefordert werden, dass der obere Ladelautstärke-Grenzwert beispielsweise 65dB beträgt, sondern dass der obere Ladelautstärke-Grenzwert mit Bezug auf die Ladestation und/oder einen Ladepark mit mehreren Ladestationen nach Norden 60dB und in die anderen Himmelsrichtungen 70dB beträgt. Dadurch kann der Ladevorgang beispielsweise abhängig von der Bauart eines Ladeparks mit mehreren Ladestationen und/oder der Ladestationen selbst, der Ausrichtung einer Ladestation in eine bestimmte Himmelsrichtung, der Ausrichtung des Fahrzeugs in bestimmte Himmelsrichtungen, der Ausrichtung und/oder Position des Fahrzeugs zur Ladestation und/oder der Ausrichtung und/oder Position des Fahrzeugs im Ladepark durchgeführt werden. Zum Bestimmen der Ladeleistung und der damit verbundenen Ladelautstärke kann es so beispielsweise einen Unterschied machen, ob das Fahrzeug quer oder längs zur Ladestation steht, oder ob das Fahrzeug an einer Ladestation eines Ladeparks nahe einer Siedlung oder an einer Ladestation eines Ladepark weiter weg von der Siedlung, ggf. noch hinter einer Lärmschutzwand, geparkt ist. Damit können im Vergleich zu einem Fall, in welchem die Himmelsrichtung und/oder eine spezifische Position des Fahrzeugs an der Ladestation und/oder in einem Ladepark mit mehreren Ladestationen nicht berücksichtigt werden, höhere Ladelautstärke-Grenzwerte verwendet bzw. akzeptiert werden. Und dies hat schließlich dahingehend vorteilhafte Auswirkungen auf das Verfahren, dass die Antriebsbatterie unter Einhaltung des oberen Ladelautstärke-Grenzwertes mit einer höheren Ladeleistung bzw. unter Entwicklung eines höheren Ladegeräusches geladen werden kann.

Darüber hinaus ist es bei einem Verfahren gemäß der vorliegenden Erfindung möglich, dass durch das Fahrzeug ein Ladelautstärke-Istwert bereitgestellt wird und durch wenigstens ein weiteres Fahrzeug mit einer weiteren Antriebsbatterie ein weiterer Ladelautstärke-Istwert bereitgestellt wird, wobei die Antriebsbatterie und die weitere Antriebsbatterie unter Berücksichtigung des Ladelautstärke-Istwerts sowie des weiteren Ladelautstärke-Istwerts geladen werden. Das heißt, es kann ein Verfahren zum elektrischen Laden einer ersten Antriebsbatterie für ein erstes Fahrzeug und einer zweiten Antriebsbatterie für ein zweites Fahrzeug in einem Ladepark zur Verfügung gestellt werden, wobei der Ladepark mehrere Ladestationen aufweist. Das Verfahren kann nun folgende Schritte aufweisen:
- Bereitstellen eines ersten Ladelautstärke-Istwertes beim Laden der ersten Antriebsbatterie,
- Bereitstellen eines zweiten Ladelautstärke-Istwertes beim Laden der zweiten Antriebsbatterie,
- Bereitstellen des oberen Ladelautstärke-Grenzwertes bzw. eines oberen Ladelautstärke-Grenzwertes, und
- Laden der ersten Antriebsbatterie und der zweiten Antriebsbatterie unter Berücksichtigung des ersten Ladelautstärke-Istwertes, des zweiten Ladelautstärke-Istwertes sowie des oberen Ladelautstärke-Grenzwertes.

Mit anderen Worten, im Rahmen des Verfahrens können bei mehreren Fahrzeugen sämtliche bzw. die jeweiligen Ladelautstärke-Istwerte sowie der obere Ladelautstärke-Grenzwert, insbesondere auch die Ladelautstärke-Zielwerte, Ladestrom-Zielwerte und/oder Ladespannungs-Zielwerte berücksichtigt werden, um basierend darauf die Antriebsbatterien zu laden. Hierbei kann jedem Fahrzeug ein Geräuschkontingent in Form des oberen Ladegeräusch-Grenzwertes zugeordnet werden. Wird anhand eines Ladelautstärke-Istwertes, insbesondere anhand eines Vergleichs zwischen einem Ladelautstärke-Istwert und einem zugehörigen oberen Ladegeräusch-Grenzwert, festgestellt, dass ein Fahrzeug sein Geräuschkontingent noch nicht ausschöpft, kann ein dadurch entstehender Geräuschkontingent-Überschuss an ein anderes Fahrzeug oder an andere Fahrzeuge verteilt werden. Erzeugt das erste Fahrzeug bzw. das Laden der ersten Antriebsbatterie beispielsweise nur 80% des ihm bzw. ihr zustehenden Geräuschkontingents, könnte das zweite Fahrzeug bzw. die zweite Antriebsbatterie mit 120% des ihm bzw. ihr zustehenden Geräuschkontingents geladen werden. Damit können unter Einhaltung der akustischen Vorgaben mehrere Antriebsbatterien in einem Ladepark mit einer insgesamt höheren bzw. entsprechend hohen Ladeleistung geladen werden.

Der Ladelautstärke-Istwerte hängt in der Praxis im Wesentlichen von einem Betrieb eines gattungsgemäßen Kältemittelverdichters bzw. Kühlers sowie eines Kühlerlüfters ab. Während des Ladens der Antriebsbatterien können zum Bereitstellen des jeweiligen Ladelautstärke-Istwertes mithin ein Lautstärkewert des Kühlers und/oder ein Lautstärkewert des Kühlerlüfters verwendet, ermittelt und/oder berücksichtigt werden.

Die Ladelautstärke-Istwerte werden bevorzugt vom jeweiligen Fahrzeug an die Ladestation und/oder einen Ladepark mit mehreren Ladestationen gesendet. Ladelautstärke-Istwerte werden vorzugsweise aus einem im Fahrzeug gespeicherten Kennfeld entnommen, in welchem verschiedene Ladelautstärke-Istwerte zu verschiedenen Betriebszuständen des Fahrzeugs bzw. des Ladebetriebs hinterlegt sind. Ein solches Kennfeld und/oder eine entsprechende Tabelle oder Datei können auch ladestationsseitig und/oder online bzw. dezentral vom Fahrzeug und der Ladestation gespeichert und/oder bereitgestellt sein. Außerdem können Ladelautstärke-Istwerte unter Verwendung von wenigstens einem Mikrofon am Fahrzeug, an der Ladestation und/oder an einer Position in der Umgebung des Fahrzeugs und/oder der Ladestation ermittelt und für die Verwendung im vorliegenden Verfahren zur Verfügung gestellt werden. So können die Antriebsbatterien beispielsweise abhängig von einer jeweiligen ersten und zweiten Schallleistung beim Laden der jeweiligen Antriebsbatterie und/oder abhängig von einem ersten und zweiten Schalldruck beim Laden der jeweiligen Antriebsbatterie geladen werden. Die Schallleistung kann jeweils aus einem Kennfeld und/oder Speicher gelesen bzw. bereitgestellt werden. Der Schalldruck kann jeweils durch das wenigstens eine Mikrofon gemessen und/oder anhand bekannter Umgebungsparameter ermittelt werden. Die bereitgestellten und/oder gemessenen Schallleistungen und/oder Schalldrücke können anschließend zum Einstellen des gewünschten Ladevorgangs verwendet werden. Das heißt, die erste Antriebsbatterie und die zweite Antriebsbatterie können unter Berücksichtigung des ersten Schalldrucks, des zweiten Schalldrucks, der ersten Schallleistung und/oder der zweiten Schallleistung geladen werden.

Die Ladelautstärke-Istwerte können ferner spezifisch zur Ladestation unter Berücksichtigung einer ausgezogenen Länge des Ladekabels zwischen Ladestation und Antriebsbatterie und/oder Fahrzeug ermittelt werden. Die Ladelautstärke-Istwerte werden während des elektrischen Ladens der Antriebsbatterien vorzugsweise regelmäßig, wiederholend und/oder in einer Dauerschleife bereitgestellt. Damit können Änderungen, wie beispielsweise das elektrische Laden eines weiteren Fahrzeugs im Ladepark, einfach und zuverlässig verarbeitet werden.

Beim Laden der Antriebsbatterie können neben den vorstehend genannten Ladelautstärken außerdem noch weitere Lautstärkewerte aus der Umgebung der Antriebsbatterie, des Fahrzeugs und/oder der Ladestation berücksichtigt werden. So können Umgebungsgeräusche von beispielsweise einem Wechselrichter und/oder von weiteren Geräusch-Emissionskomponenten an der Ladestation und/oder im Ladepark berücksichtigt werden, sodass das elektrischen Laden mit einer reduzierten Ladelautstärke durchgeführt wird, wenn in der Umgebung beispielsweise bereits wahrnehmbare Umgebungsgeräusche vorhanden sind. Die relevanten Umgebungsgeräusche können gemessen und/oder aus einem Kennfeld bzw. einer entsprechenden Tabelle, insbesondere zeit- und/oder ortsabhängig, ermittelt und für das Laden entsprechend berücksichtigt werden.

Für den vorstehend genannten Fall, dass mehrere Antriebsbatterien gleichzeitig geladen werden, können der erste Ladelautstärke-Istwert durch das erste Fahrzeug bereitgestellt werden, der zweite Ladelautstärke-Istwert durch das zweite Fahrzeug bereitgestellt werden und der obere Ladelautstärke-Grenzwert durch die Ladestationen und/oder zentral durch den Ladepark bereitgestellt werden, wobei der obere Ladelautstärke-Grenzwert vom Ladepark an das erste Fahrzeug und das zweite Fahrzeug gesendet wird, der erste Ladelautstärke-Istwert vom ersten Fahrzeug an den Ladepark gesendet wird und der zweite Ladelautstärke-Istwert von dem zweiten Fahrzeug an den Ladepark gesendet wird. Ferner ist es möglich, dass durch den Ladepark ein oberer Ladestrom-Grenzwert eines maximal zulässigen Ladestroms und/oder ein oberer Ladespannungs-Grenzwert einer maximal zulässigen Ladespannung je Fahrzeug bereitgestellt wird, wobei die Antriebsbatterie bzw. die erste Antriebsbatterie und die weitere bzw. zweite Antriebsbatterie jeweils unter Berücksichtigung des oberen Ladestrom-Grenzwertes und/oder des oberen Ladespannungs-Grenzwertes geladen werden. Darüber hinaus ist es möglich, dass der obere Ladestrom-Grenzwert und/oder der obere Ladespannungs-Grenzwert anhand einer Anzahl gleichzeitig zu ladender Fahrzeuge, des ersten Ladelautstärke-Istwertes des ersten Fahrzeugs, des zweiten Ladelautstärke-Istwertes des zweiten Fahrzeugs, und/oder eines Umgebungsgeräuschwertes ermittelt werden. Außerdem ist es möglich, dass durch das erste Fahrzeug und durch das zweite Fahrzeug jeweils ein Ladestrom-Zielwert eines möglichst zu erreichenden Ladestroms und/oder ein Ladespannungs-Zielwert einer möglichst zu erreichenden Ladespannung bereitgestellt werden, wobei die erste Antriebsbatterie und die zweite Antriebsbatterie jeweils unter Berücksichtigung des Ladestrom-Zielwertes und/oder des Ladespannungs-Zielwertes geladen werden.

Darüber hinaus ist es möglich, dass bei einem erfindungsgemäßen Verfahren zunächst eine vordefinierbare Ladeart zum Laden der Antriebsbatterie bestimmt und/oder eine vordefinierbare Ladeart zum Laden der Antriebsbatterie aus verschiedenen Ladearten ausgewählt wird. Hierdurch besteht die Möglichkeit, dass das vorstehend beschriebene Kommunikationsprotokoll voll abwärtskompatibel ist, und sowohl ein Fahrzeug ohne eine entsprechende Funktion an einer Ladestation mit einer solchen Funktion, als auch ein Fahrzeug mit der Funktion an einer Ladestation ohne die Funktion geladen werden können.

Gemäß einem weiteren Aspekt der vorliegenden Erfindung wird ein Fahrzeug mit einem Fahrzeug-Controller zum Kontrollieren des elektrischen Ladens der Antriebsbatterie zur Verfügung gestellt, wobei der Fahrzeug-Controller für das Durchführen eines wie vorstehend beschriebenen Verfahrens konfiguriert und ausgestaltet ist. Außerdem wird eine Ladestation zum elektrischen Laden einer Antriebsbatterie für ein Fahrzeug zur Verfügung gestellt, die einen Ladestation-Controller zum Kontrollieren des elektrischen Ladens der Antriebsbatterie aufweist und wobei der Ladestation-Controller zum Durchführen eines wie vorstehend beschriebenen Verfahrens konfiguriert und ausgestaltet ist. Damit bringen das erfindungsgemäße Fahrzeug und die erfindungsgemäße Ladestation die gleichen Vorteile mit sich, wie sie ausführlich mit Bezug auf das erfindungsgemäße Verfahren beschrieben worden sind. Das Verfahren kann unter Verwendung bzw. Betätigung des Fahrzeug-Controllers und/oder des Ladestation-Controllers durchgeführt werden. Der Fahrzeug-Controller und der Ladestation-Controller müssen also nicht jeweils allein für das Durchführen des Verfahrens verantwortlich sein. Vielmehr sind der Fahrzeug-Controller und der Ladestation-Controller jeweils als ein Bestandteil zum Durchführen des Verfahrens zu verstehen. Der Ladestation-Controller kann ferner mechanisch losgelöst und/oder beabstandet von der Ladestation im Ladepark, beispielsweise in Form oder als Teil eines Zentral-Controllers für mehrere Ladestationen, ausgestaltet sein.

Weiterhin wird ein Computerprogrammprodukt zur Verfügung gestellt, das Befehle umfasst, die bei der Ausführung des Computerprogrammprodukts durch einen Computer diesen veranlassen, das vorstehend beschriebene Verfahren auszuführen. Hierzu kann das Computerprogrammprodukt Befehle umfassen, die bewirken, dass mit einem wie vorstehend beschriebenen Fahrzeug und/oder einer wie vorstehend beschriebenen Ladestation die vorstehend beschriebenen Verfahrensschritte ausführt werden. Das Computerprogrammprodukt kann als computerlesbarer Anweisungscode in jeder geeigneten Programmiersprache und/oder Maschinensprache wie beispielsweise in JAVA, C++, C# und/oder Python implementiert sein. Das Computerprogrammprodukt kann auf einem computerlesbaren Speichermedium wie einer Datendisk, einem Wechsellaufwerk, einem flüchtigen oder nichtflüchtigen Speicher, oder einem eingebauten Speicher/Prozessor abgespeichert sein. Der Anweisungscode kann einen Computer oder andere programmierbare Geräte wie ein Steuergerät, beispielsweise den Fahrzeug-Controller und/oder den Ladestation-Controller, derart programmieren, dass die gewünschten Funktionen ausgeführt werden. Ferner kann das Computerprogrammprodukt in einem Netzwerk wie beispielsweise dem Internet bereitgestellt werden und/oder sein, von dem es bei Bedarf von einem Nutzer heruntergeladen werden kann. Das Computerprogrammprodukt kann sowohl mittels einer Software, als auch mittels einer oder mehrerer spezieller elektronischer Schaltungen, d.h. in Hardware oder in beliebig hybrider Form, d.h. mittels Software-Komponenten und Hardware-Komponenten, realisiert werden und/oder sein. Weiterhin wird ein Speichermittel zur Verfügung gestellt, auf dem ein wie vorstehend beschriebenes Computerprogrammprodukt gespeichert ist. Das Speichermittel ist vorzugsweise in Form eines computerlesbaren und/oder nichtflüchtigen Speichermittels ausgestaltet.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder den Figuren hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Es zeigen jeweils schematisch:
- Figur 1: eine Darstellung von zwei Fahrzeugen in einem Ladepark mit mehreren Ladestationen,
- Figur 2: ein Flussdiagramm zum Erläutern eines Verfahrens gemäß einer ersten Ausführungsform der vorliegenden Erfindung,
- Figur 3: ein Flussdiagramm zum Erläutern eines Verfahrens gemäß einer zweiten Ausführungsform der vorliegenden Erfindung, und
- Figur 4: ein Speichermittel mit einem darauf gespeicherten Computerprogrammprodukt.

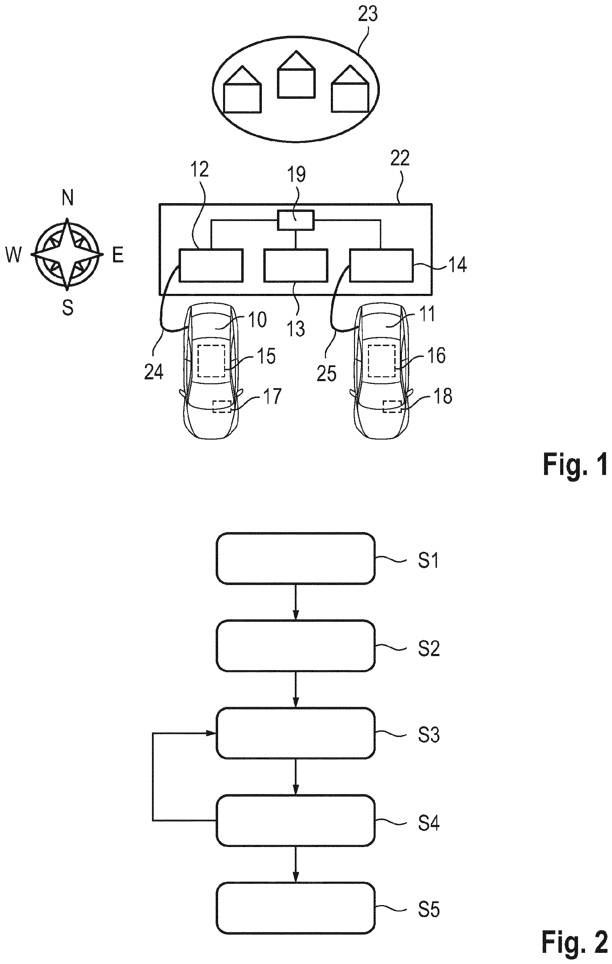

Fig. 1 zeigt einen Ladepark 22 mit einer ersten Ladestation 12, einer zweiten Ladestation 13 und einer dritten Ladestation 14. Der Ladepark 22 weist einen dezentralen Ladestation-Controller 19 zum Kontrollieren des elektrischen Ladens von Antriebsbatterien 15, 16 von Fahrzeugen 10, 11 auf. In bzw. an dem in Fig. 1 gezeigten Ladepark werden zwei Fahrzeuge 10, 11 bzw. zwei Antriebsbatterien 15, 16 der Fahrzeuge 10, 11 geladen. Genauer gesagt ist ein erstes Fahrzeug 10 zum elektrischen Laden einer ersten Antriebsbatterie 15 des ersten Fahrzeugs 10 über ein erstes Ladekabel 24 an einer ersten Ladestation 12 angeschlossen. Ferner ist ein zweites Fahrzeug 11 zum elektrischen Laden einer zweiten Antriebsbatterie 16 des zweiten Fahrzeugs 11 über ein zweites Ladekabel 25 an einer zweiten Ladestation 14 angeschlossen. Das erste Fahrzeug 10 weist einen ersten Fahrzeug-Controller 17 zum Kontrollieren des elektrischen Ladens der ersten Antriebsbatterie 15 auf und das zweite Fahrzeug 11 weist einen zweiten Fahrzeug-Controller 18 zum Kontrollieren des elektrischen Ladens der zweiten Antriebsbatterie 16 auf. An einer dritten Ladestation 13 ist kein Fahrzeug bzw. keine Antriebsbatterie angeschlossen. Nördlich zum Ladepark 22 sowie zu den Ladestationen 12, 13, 14 des Ladeparks 22 befindet sich eine Siedlung 23. Mit Bezug auf die anderen Himmelsrichtungen zum Ladepark 22 kann davon ausgegangen werden, dass sich freie Felder befinden.

Mit Bezug auf die Figuren 1 und 2 wird anschließend ein Verfahren zum elektrischen Laden der ersten Antriebsbatterie 15 des ersten Fahrzeugs 10 an der ersten Ladestation 12 erläutert. Hierzu wird in einem ersten Schritt S1 zunächst ein Ladebetrieb gestartet. In einem zweiten Schritt S2 wird durch das Fahrzeug 10 oder die Ladestation 12 ein Akustik-Lademodus ausgewählt, bei welchem während des Ladevorgangs bzw. beim elektrischen Laden der Antriebsbatterie 15 vordefinierte akustische Grenzen zu berücksichtigen sind. In einem dritten Schritt S3 werden durch die Ladestation 12 ein oberer Ladelautstärke-Grenzwert einer maximal zulässigen Ladelautstärke und/oder eines maximal zulässigen Geräuschpegels im Bereich der Ladestation 12 und/oder des Ladeparks 22, ein oberer Ladestrom-Grenzwert eines maximal zulässigen Ladestroms zum Laden der Antriebsbatterie 15 sowie ein oberer Ladespannungs-Grenzwert einer maximal zulässigen Ladespannung zum Laden der Antriebsbatterie 15 bereitgestellt und über das erste Ladekabel 24 an das Fahrzeug 10 gesendet. Der obere Ladelautstärke-Grenzwert wird hierbei mit Bezug auf wenigstens eine vordefinierte Himmelsrichtung, im vorliegenden Fall mit Bezug auf Norden, bereitgestellt. Hiermit wird berücksichtigt, dass die Schallabstrahlung des Fahrzeugs 10 entsprechend richtungsbezogen ist und die Anforderung im Ladepark 22 durch Anwohner der Siedlung 23 richtungsabhängig ist. Im vorliegenden Fall wird der Ladelautstärke-Grenzwert mit Bezug auf Norden deshalb niedriger als mit Bezug auf die anderen Himmelsrichtungen bereit- bzw. eingestellt.

In einem vierten Schritt S4 werden durch das Fahrzeug 10 bzw. durch eine Funktionskomponente wie den Fahrzeug-Controller 17 ein Ladelautstärke-Zielwert, ein Ladestrom-Zielwert eines möglichst zu erreichenden Ladestroms zum Laden der Antriebsbatterie 15 und ein Ladespannungs-Zielwert einer möglichst zu erreichenden Ladespannung zum Laden der Antriebsbatterie 15 bereitgestellt und über das erste Ladekabel 24 an die Ladestation 12 gesendet.

Die in Schritt S3 und S4 bereitgestellten bzw. gesendeten Daten werden unter Verwendung eines Kommunikationsprotokolls zwischen dem Fahrzeug 10 und der Ladestation 12 zum elektrischen Laden der Antriebsbatterie 15 mit einer möglichst hohen Ladeleistung sowie unter Einhaltung des akustischen Rahmens genutzt. Entsprechend werden die Schritte S3 und S4 über die Laufzeit des Ladevorgangs in einer Dauerschleife durchgeführt, bis der Ladevorgang in einem letzten Schritt S5 endet.

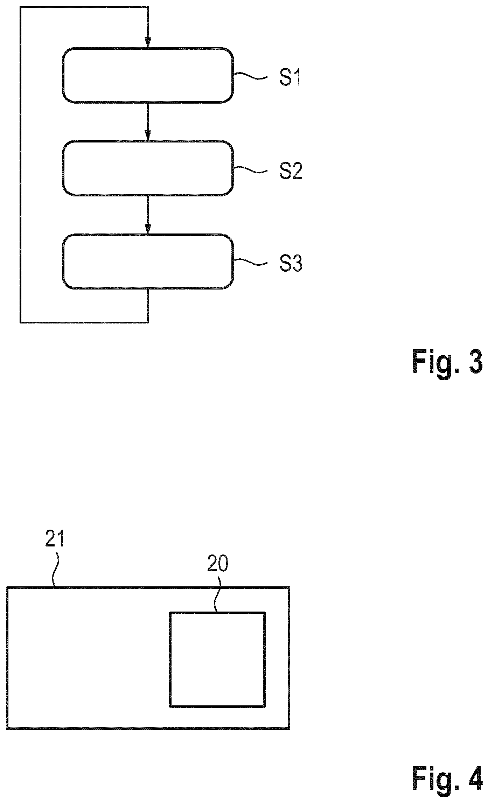

Mit Bezug auf die Figuren 1 und 3 wird anschließend ein Verfahren zum elektrischen Laden der Antriebsbatterie 15 bzw. einer ersten Antriebsbatterie 15 des ersten Fahrzeugs 10 und der weiteren bzw. zweiten Antriebsbatterie 16 des zweiten Fahrzeugs 11 im Ladepark 22 erläutert. In einem ersten Schritt S1 werden zunächst verschiedene Schallemissionen unterschiedlicher Schallquellen im und am Ladepark ermittelt. Hierbei werden während des elektrischen Ladens der ersten Antriebsbatterie 15 ein erster Ladelautstärke-Istwert und während des Ladens der zweiten Antriebsbatterie 16 ein zweiter Ladelautstärke-Istwert bereitgestellt. Genauer gesagt werden die Ladelautstärke-Istwerte aus einem Speicher der Fahrzeuge 10, 11 über die jeweiligen Fahrzeug-Controller 17, 18 an den Ladepark 22 übermittelt. Außerdem wird durch den Ladestation-Controller 19 ein oberer Ladelautstärke-Grenzwert bereitgestellt. Außerdem werden Immissionen an der Siedlung 23 berechnet, insbesondere unter Berücksichtigung des Abstands des Ladeparks 22 zur Siedlung 23 sowie unter den bereitgestellten und/oder ermittelten Emissionen. In einem zweiten Schritt S2 wird mittels eines Kommunikationsprotokolls ein Vergleich zwischen den berechneten Immissionen und dem oberen Lautstärke-Grenzwert bzw. erlaubten Immissionen durchgeführt. In einem dritten Schritt S3 werden anschließend die erste Antriebsbatterie 15 und die zweite Antriebsbatterie 16 unter Berücksichtigung des Vergleichs geladen. Insbesondere werden den unterschiedlichen Emissionsquellen, also den Fahrzeugen 10, 11, unterschiedliche Emissionsrechte zugewiesen bzw. Ladelautstärken erlaubt. Die unterschiedlichen Ladelautstärken können jeweils den gleichen Wert oder unterschiedliche Werte aufweisen. Die Schritte S1 bis S3 können anschließend über die Zeit des Ladevorgangs wiederholt durchgeführt werden.

In Fig. 4 ist ein computerlesbares und nichtflüchtiges Speichermittel 21 gezeigt, auf dem ein Computerprogrammprodukt 20 gespeichert ist. Das Computerprogrammprodukt 20 umfasst Befehle, die bei der Ausführung des Computerprogrammprodukts 20 durch einen Computer diesen veranlassen, das mit Bezug auf Fig. 1 und Fig. 2 beschriebene Verfahren auszuführen.

Die Erfindung lässt neben den dargestellten Ausführungsformen weitere Gestaltungsgrundsätze zu. D.h., die Erfindung soll nicht auf die mit Bezug auf die Figuren erläuterten Ausführungsbeispiele beschränkt betrachtet werden.

### Bezugszeichenliste

- 10: Fahrzeug
- 11: Fahrzeug
- 12: Ladestation
- 13: Ladestation
- 14: Ladestation
- 15: Antriebsbatterie
- 16: Antriebsbatterie
- 17: Fahrzeug-Controller
- 18: Fahrzeug-Controller
- 19: Ladestation-Controller
- 20: Computerprogrammprodukt
- 21: Speichermittel
- 22: Ladepark
- 23: Siedlung
- 24: Ladekabel
- 25: Ladekabel

## Patentansprüche

1. Verfahren zum elektrischen Laden einer Antriebsbatterie (15, 16) für ein Fahrzeug (10, 11) an einer Ladestation (12, 13, 14), aufweisend die Schritte:
- Bereitstellen eines oberen Ladelautstärke-Grenzwertes,
- Bereitstellen eines Ladelautstärke-Zielwertes, und
- Laden der Antriebsbatterie (15) unter Berücksichtigung des oberen Ladelautstärke-Grenzwertes sowie des Ladelautstärke-Zielwertes.

2. Verfahren nach Anspruch 1,
**dadurch gekennzeichnet,**
**dass** der obere Ladelautstärke-Grenzwert von der Ladestation (12, 13, 14) an das Fahrzeug (10, 11) gesendet wird und der Ladelautstärke-Zielwert vom Fahrzeug (10, 11) an die Ladestation (12, 13, 14) gesendet wird.

3. Verfahren nach einem der voranstehenden Ansprüche,
**dadurch gekennzeichnet,**
**dass** durch die Ladestation (12, 13, 14) ein oberer Ladestrom-Grenzwert eines maximal zulässigen Ladestroms und/oder ein oberer Ladespannungs-Grenzwert einer maximal zulässigen Ladespannung bereitgestellt werden und die Antriebsbatterie (15, 16) unter Berücksichtigung des oberen Ladestrom-Grenzwertes und/oder des oberen Ladespannungs-Grenzwertes geladen wird.

4. Verfahren nach einem der voranstehenden Ansprüche,
**dadurch gekennzeichnet,**
**dass** durch das Fahrzeug (10, 11) ein Ladestrom-Zielwert eines möglichst zu erreichenden Ladestroms und/oder ein Ladespannungs-Zielwert einer möglichst zu erreichenden Ladespannung bereitgestellt werden und die Antriebsbatterie (15, 16) unter Berücksichtigung des Ladestrom-Zielwertes und/oder des Ladespannungs-Zielwertes geladen wird.

5. Verfahren nach einem der voranstehenden Ansprüche,
**dadurch gekennzeichnet,**
**dass** der obere Ladelautstärke-Grenzwert mit Bezug auf wenigstens eine vordefinierte Himmelsrichtung bereitgestellt wird.

6. Verfahren nach einem der voranstehenden Ansprüche,
**dadurch gekennzeichnet,**
**dass** durch das Fahrzeug (10) ein Ladelautstärke-Istwert bereitgestellt wird und durch wenigstens ein weiteres Fahrzeug (11) mit einer weiteren Antriebsbatterie (16) ein weiterer Ladelautstärke-Istwert bereitgestellt wird, wobei die Antriebsbatterie (15) und die weitere Antriebsbatterie (16) unter Berücksichtigung des Ladelautstärke-Istwerts sowie des weiteren Ladelautstärke-Istwerts geladen werden.

7. Verfahren nach einem der voranstehenden Ansprüche,
**dadurch gekennzeichnet,**
**dass** vor dem Laden der Antriebsbatterie (15) eine vordefinierbare Ladeart zum Laden der Antriebsbatterie (15) bestimmt und/oder eine vordefinierbare Ladeart zum Laden der Antriebsbatterie aus verschiedenen Ladearten ausgewählt wird.

8. Fahrzeug (10, 11) mit einem Fahrzeug-Controller (17, 18) zum Kontrollieren des elektrischen Ladens der Antriebsbatterie (15, 16), wobei der Fahrzeug-Controller (17, 18) für das Durchführen eines Verfahrens nach einem der Ansprüche 1 bis 7 konfiguriert und ausgestaltet ist.

9. Ladestation (12, 13, 14) zum elektrischen Laden einer Antriebsbatterie (15, 16) für ein Fahrzeug (10, 11), aufweisend einen Ladestation-Controller (19) zum Kontrollieren des elektrischen Ladens der Antriebsbatterie (15, 16), wobei der Ladestation-Controller (19) für das Durchführen eines Verfahrens nach einem der Ansprüche 1 bis 7 konfiguriert und ausgestaltet ist.

10. Computerprogrammprodukt (20), umfassend Befehle, die bei der Ausführung des Computerprogrammprodukts (20) durch einen Computer diesen veranlassen, das Verfahren nach einem der Ansprüche 1 bis 7 auszuführen.

11. Speichermittel (21) mit einem darauf gespeicherten Computerprogrammprodukt (20) nach Anspruch 10.
